(19) Europäisches Patentamt
European Patent Office
Office européen des brevets

(11) Veröffentlichungsnummer: 0 349 809
A2

# (12) EUROPÄISCHE PATENTANMELDUNG

(21) Anmeldenummer: 89111023.1

(22) Anmeldetag: 17.06.89

(51) Int. Cl.4: C09B 23/16 , C08K 5/29

(30) Priorität: 02.07.88 DE 3822491
19.07.88 DE 3824454

(43) Veröffentlichungstag der Anmeldung:
10.01.90 Patentblatt 90/02

(84) Benannte Vertragsstaaten:
CH DE FR GB IT LI

(71) Anmelder: BAYER AG

D-5090 Leverkusen 1 Bayerwerk(DE)

(72) Erfinder: Rolf, Meinhard, Dr.
Berta-von-Suttner-Strasse 24
D-5090 Leverkusen 1(DE)
Erfinder: Kaletta, Bernd, Dr.
Heymannstrasse 40
D-5090 Leverkusen 1(DE)

## (54) Metallkomplex-Pigmente.

(57) Metallkomplexe von Azinen der Formel

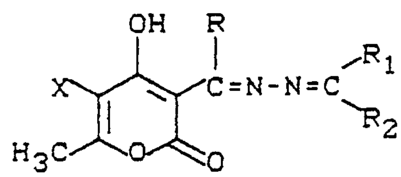

(I)

in der
X Wasserstoff oder Halogen,
R Wasserstoff oder einen organischen Rest,
$R_1$ Wasserstoff oder einen organischen Rest,
$R_2$ einen organischen Rest bedeuten, wobei $R_1$ und $R_2$ auch zusammen mit dem sie verbindenden C-Atom einen carbo- oder heterocyclischen Ring oder ein carbo-oder heterocyclisches Ringsystem, wobei die genannten Ringe und Ringsysteme substituiert sein können, bilden können, und einer der Reste $R_1$, $R_2$ oder $R_1$, $R_2$ zusammen eine zur Metallsalzbildung befähigte Gruppe enthalten, sowie Verfahren zum Pigmentieren unter Verwendung dieser Metallkomplexe.

EP 0 349 809 A2

## Metallkomplex-Pigmente

Die Erfindung betrifft Metallkomplexe von Azinen der Formel

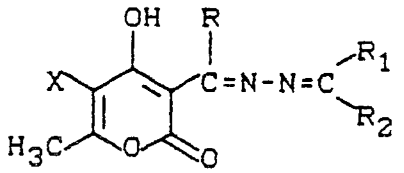

(I)

Verfahren zu ihrer Herstellung und Verfahren zum Pigmentieren.

In der Formel (I) bedeuten

X Wasserstoff oder Halogen,

R Wasserstoff oder einen organischen Rest,

$R_1$ Wasserstoff oder einen organischen Rest,

$R_2$ einen organischen Rest, wobei $R_1$ und $R_2$ auch zusammen mit dem sie verbindenen C-Atom einen carbo- oder heterocyclischen Ring oder ein carbo-oder heterocyclisches Ringsystem, wobei die genannten Ringe und Ringsysteme substituiert sein können, bilden können, und einer der Reste $R_1$, $R_2$ oder $R_1$, $R_2$ zusammen eine zur Metallsalzbildung befähigte Gruppe enthalten.

Metallkomplexe, die eines der folgenden Strukturmerkmale aufweisen, sind bevorzugt:

1. Metallkomplexe mit zweiwertigen Metallen, z.B. Zn, Cd, Mn, Co, Fe und insbesondere Ni und Cu.
2. 1:1-Metallkomplexe.
3. Metallkomplexe von Azinen der Formel I, in der X = H.
4. Metallkomplexe von Azinen der Formel I, in der R = H, $CH_3$.
5. Metallkomplexe von Azinen der Formel I, in der

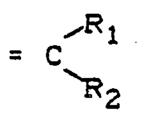

für den Rest eines 5- oder 6-gliedrigen Rings, der 1 oder 2 Heteroatome aus der Reihe N, O, S enthält, substituiert sein kann und eine zur Metallsalzbildung befähigte Gruppe aufweist, und an den ein gegebenenfalls substituierter carbo- oder ein gegebenenfalls substitu ierter heterocyclischer Ring, z.B. ein Benzo- oder Cyclohexylen-Rest oder der Rest eines 1 oder 2 Heteroatome aus der Reihe N, O, S enthaltenden Ringes ankondensiert sein kann, steht.

6. Metallkomplexe von Azinen der Formel I, in der die zur Metallsalzbildung befähigte Gruppe in $R_1$ bzw. $R_2$ in 2-Stellung zur 1-ständigen Azingruppierung steht.

7. Metallkomplexe von Azinen der Formel I, in der

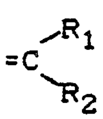

für

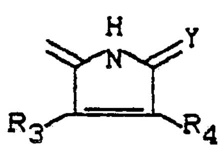

(II)

steht, wobei

Y für den zweiwertigen Rest einer Verbindung mit zwei austauschbaren Wasserstoffatomen an einem C- oder N-Atom, insbesondere den zweiwertigen Rest einer methylenaktiven Verbindung, eines Amins, Hydrazins, Hydrazids oder Hydrazons steht und

$R_3$, $R_4$ H oder organische Reste, bezeichnen, wobei $R_3$ und $R_4$ auch zusammen einen ankondensierten carbo-oder heterocyclischen Ring oder ein carbo- oder heterocyclisches Ringsystem, wobei die genannten Ringe und Ringsysteme substituiert sein können, bilden können.

8. Metallkomplexe von Azinen der Formel I, in der

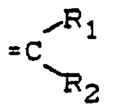 für 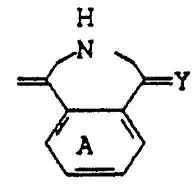

steht, wobei Y die zu Formel II angegebene Bedeutung hat und der Ring A 1-4 Substituenten tragen kann.

9. Metallkomplexe von Azinen der Formel I, in der

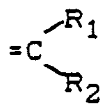 für 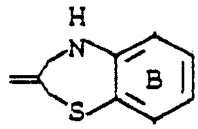 ,

steht, wobei der mit B bezeichente Ring 1-4 Substituenten tragen kann.

10. Metallkomplexe von Azinen der Formel I, in der

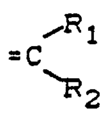 für 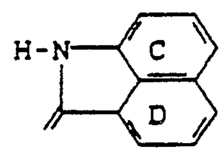

steht, wobei die mit C und D bezeichneten Ringe 1-6 Substituenten aufweisen können.

Die Kombination verschiedener dieser Strukturmerkmale führt zu besonders bevorzugten Metallkomplexen. Beispiele sind folgende Kombinationen:
1.2.; 1.3.; 1.4.; 1.5.; 1.6.; 1.7.; 1.8.; 1.9.; 2.3.; 2.4.; 2.5.; 2,6.; 2.7.; 2.8.; 2.9.; 3.4.; 3.5.; 3.6.; 3.7.; 3.8.; 3.9.; 4.5.; 4.6.; 4.7.; 4,8.; 4.9.; 1.2.3.; 1.2.4.; 1.2.5.; 1.2.6.; 1.3.4.; 1.3.5.; 1.3.6.; 1.4.5.; 1.4.6.; 1.5.6.; 2.3.4.; 2.3.5.; 2.3.6.; 2.4.5.; 2.4.6.; 2.5.6.; 3.4.5.; 3.4.6.; 3.5.6.; 1.2.7.; 1.3.7.; 1.4.7.; 1.6.7.; 2.3.7.; 2.4.7.; 2.6.7.; 3.4.7.; 3.6.7.; 1.2.8.; 1.3.8.; 1.4.8.; 1.6.8.; 2.3.8.; 2.4.8.; 2.6.8.; 3.4.8.; 3.6.8.; 1.2.9.; 1.3.9.; 1.4.9.; 1.6.9.; 2.3.9.; 2.4.9.; 2.6.9.; 3.4.9.; 3.6.9.; 1.2.10.; 1.3.10.; 1.4.10.; 1.6.10.; 2.3.10.; 2.4.10.; 2.6.10.; 3.4.10.; 3.6.10. sowie Kombinationen aus vier, fünf oder sechs der Strukturmerkmale 1., 2., 3., 4., 5., 6.; 1., 2., 3., 4., 6., 7.; 1., 2., 3., 4., 6., 8.; 1., 2., 3., 4., 6., 9. und 1., 2., 3., 4., 6., 10.

Bei den organischen Resten R, $R_1$, $R_2$, $R_3$, $R_4$ handelt es sich vorzugsweise um Alkyl, Cycloalkyl, Aryl, Aralkyl oder heterocyclische Reste, wobei die aufgeführten Reste substituiert sein können.

Alkyl steht insbesondere für $C_1$-$C_6$-Alkyl, z.B. Methyl, Ethyl, n- und i-Propyl, i- und t-Butyl.

Cycloalkyl steht insbesondere für mono-, bi- und tricyclisches Cycloalkyl mit 3-10, insbesondere 3,5 oder 6C-Atomen. Beispielhaft seien genannt: Cyclopropyl, Cyclobutyl, Cyclopentyl, Cyclohexyl, Cycloheptyl, Bicyclo[2.2.1.]heptyl, Bicyclo[2.2.2.]octyl, Adamantyl.

Aryl steht vorzugsweise für Phenyl und Naphthyl.

Aralkyl steht vorzugsweise für Phenyl-$C_1$-$C_4$-alkyl und Naphthyl-$C_1$-$C_4$-alkyl, z.B. Benzyl und Phenethyl.

Heterocyclische Reste sind insbesondere heteroparaffinische, heteroaromatische und heteroolefinische 5- bis 7-gliedrige, vorzugsweise 5-oder 6-gliedrige Ringe mit vorzugsweise 1 bis 3, insbesondere 1 oder 2 gleichen oder verschiedenen Heteroatomen. Als Heteroatome stehen Sauerstoff, Schwefel oder Stickstoff. Als Beispiele seien Pyrrolidinyl, Piperidinyl, Furyl, Thiophenyl, Pyrazolyl, Imidazolyl, 1,2,3- und 1,2,4-Triazolyl, Oxazolyl, Isoxazolyl, Thiazolyl, Isothiazolyl, 1,2,3-, 1,3,4-, 1,2,4- und 1,2,5-Oxadiazolyl, Azepinyl, Pyrrolyl, Isopyrrolyl, Pyridyl, Piperazinyl, Pyridazinyl, Pyrimidinyl, Pyrazinyl, 1,3,5-, 1,2,4- und 1,2,3-Triazinyl, 1,2,4-, 1,3,2-, 1,3,6- und 1,2,6-Oxazinyl, Oxepinyl, Thiepinyl und 1,2,4-Diazepinyl genannt.

Die Alkyl-, Cycloalkyl-, Aryl-, Aralkyl- und hetercyclischen Reste R, $R_1$, $R_2$, $R_3$, $R_4$ sowie die Ringe A, B, C und D und die durch $R_1$ und $R_2$ zusammen mit dem sie verbindenden C-Atom gebildeten carbo- oder heterocyclischen Ringe oder carbo- oder heterocyclischen Ringsysteme können z.B. durch Alkyl mit vorzugsweise 1 bis 4, insbesondere 1 oder 2 Kohlenstoffatomen, wie Methyl, Ethyl, n- und i-Propyl und n-, i- und t-Butyl; Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1

oder 2 Kohlenstoffatomen, wie Methylthio, Ethylthio, n- und i-Propylthio und n-, i- und t-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogematome, vorzugsweise Fluor, Chlor oder Brom, insbesondere Fluor stehen, wie Trifluormethyl; Hydroxy; Halogen, vorzugsweise Fluor, Chlor, Brom und Jod, insbesondere Chlor und Brom; Cyano; Nitro; Amino; Monoalkyl- und Dialkylamino mit vorzugsweise 1 bis 4, insbesondere 1 oder 2 Kohlenstoffatomen je Alkylgruppe, wie Methylamino, Methyl-ethyl-amino, n- und i-Propylamino und Methyl-n-butylamino; Carboxyl; Carbalkoxy mit vorzugsweise 2 bis 4, insbesondere 2 oder 3 Kohlenstoffatomen, wie Carbomethoxy und Carboethoxy; Sulfo ($-SO_3H$); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl substituiert sein.

Bei der in $R_1$ und/oder $R_2$ vorliegenden, zur Metallsalzbindung befähigten Gruppe handelt es sich vorzugsweise um -OH, -SH, -NH, -COOH oder $-SO_3H$.

Halogen X steht insbesondere für F, Cl, Br.

Der Rest X in den Formeln (II) und (III) kann z.B. abgeleitet sein von einer methylenaktiven Verbindung der Formel (IV)

$CNCH_2R^6$ (IV)

wobei

$R^6$ folgende Bedeutung besitzt:

Cyan; $C_1$-$C_6$-Alkoxycarbonyl; $C_1$-$C_6$-Alkylcarbonyl, insbesondere Acetyl; gegebenenfalls substituiertes Benzoyl, gegebenenfalls substituiertes Phenoxycarbonyl; gegebenenfalls substituiertes Phenyl.

Als Substituenten in Benzoyl, Phenoxycarbonyl und Phenyl kommen 1-4 Substituenten aus der Reihe Chlor, Brom, Nitro, Cyan, Acetylamino, gegebenenfalls durch Chlor oder Nitro substituiertes Benzoylamino, Carbamoyl, N-Methylcarbamoyl, gegebenenfalls durch Chlor oder Nitro substituiertes N-Phenylcarbamoyl, Phthalimidyl oder Tetrachlorphthalimidyl infrage.

$R^6$ kann weiterhin für einen heterocyclischen Rest der Formel (V)

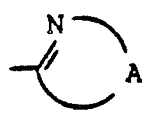 (V)

stehen, in der

A für die restlichen Glieder eines gegebenenfalls weitere Heteroatome enthaltenden und gegebenenfalls anellierten 5- oder 6-gliedrigen Ring steht. Beispiele für heterocyclische Reste $R^6$ sind

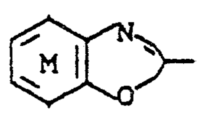 (VI) 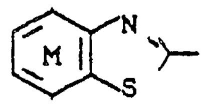 (VII)

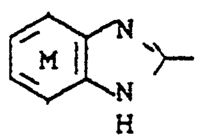 (VIII) 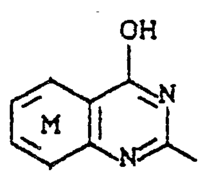 (IX)

Die mit M bezeichneten Ringe in den Formeln (VI) bis (IX) können substituiert sein, z.B. durch Halogen, vorzugsweise Chlor und Brom; Nitro; $C_1$-$C_6$-Alkyl, vorzugsweise Methyl und Ethyl; $C_1$-$C_6$-Alkoxy, vorzugsweise Methoxy und Ethoxy.

Bevorzugt steht $R^6$ für einen Carbamoylrest der Formel (X)

$-CO-NH-R^7$ (X)

in der

$R^7$ Wasserstoff; $C_1$-$C_4$-Alkyl, insbesondere Methyl; gegebenenfalls substituiertes Phenyl oder Naphthyl oder einen Rest der Formeln (VI) bis (IX) bedeutet.

Als Substituenten der Phenyl- oder Naphtylreste kommen 1-5 Substituenten der Reihe Halogen, insbesondere Chlor oder Brom; Nitro; $C_1$-$C_6$-Alkyl, insbesondere Methyl; $C_1$-$C_6$-Alkoxy, insbesondere Methoxy oder Ethoxy; Carbamoyl; N-Alkylcarbamoyl, insbesondere N-Methylcarbamoyl; N-Phenylcarbamoyl, wobei Phenyl substituiert sein kann, z.B. durch Chlor, Brom, Nitro, Fluor, Methyl, Ethyl, Methoxy, Ethoxy, Phthalimidyl, Tetrachlorphthalimidyl, $C_1$-$C_4$-Acylamino, gegebenenfalls weitersubstituiertes Benzoylamino oder einen Rest der Formeln (VI) bis (IX); $C_1$-$C_4$-Acylamino, insbesondere Acetylamino und Formamido; Phthalimidyl; Tetrachlorphthalimidyl; Aroylamino, insbesondere Benzoylamino, wobei Benzoylamino im Phenylring weitersubstituiert sein kann, beispielsweise durch Chlor, Brom, Nitro, Fluor, Methyl, Ethyl, Methoxy, Ethoxy, Phthalimidyl, Tetrachlorphthalimidyl, $C_1$-$C_4$-Acylamino, gegebenenfalls weitersubstituiertes Benzoylamino oder einen Rest der Formeln (VI) bis (IX); $C_1$-$C_4$-Alkylsulfoxyl, insbesondere Methylsulfonyl in Frage.

Der Rest Y in den Formeln (II) und (III) kann weiterhin abgeleitet sein von methylenaktiven cyclischen Verbindungen, beispielsweise der folgenden Formeln:

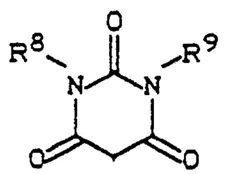

(X)

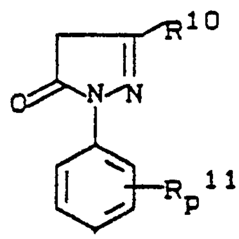

(XI)

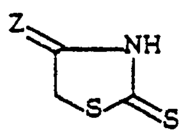

(XII)

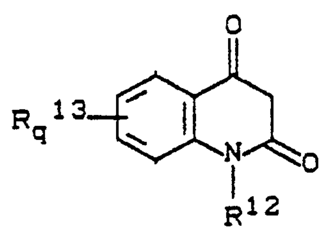

(XIII)

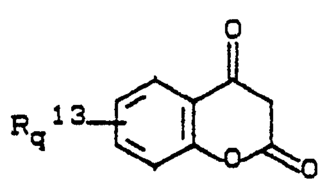

(XIV)

in den Formeln (X) bis (XIV) bezeichnen z.B.

$R^8$, $R^9$ Wasserstoff, $C_1$-$C_6$-Alkyl; gegebenenfalls durch Halogen, wie Chlor und Brom, $C_1$-$C_6$-Alkyl, $C_1$-$C_6$-Alkoxy oder Nitro substituiertes Phenyl; und $\alpha$- und $\beta$-Naphthyl;

$R^{10}$ $C_1$-$C_6$-Alkyl, vorzugsweise Methyl; Amino; $C_1$-$C_6$-Alkylcarbonyl; Carbamoyl, $C_1$-$C_6$-Alkoxycarbonyl;

$R^{11}$ $C_1$-$C_6$-Alkyl vorzugsweise Methyl, Halogen, vorzugsweise Chlor, Nitro;

p 0, 1 oder 2;
Z O oder S;
$R^{12}$ Wasserstoff oder $C_1$-$C_6$-Alkyl, vorzugsweise Methyl;
$R^{13}$ Halogen, vorzugsweise Chlor; Nitro
q 0, 1, 2, 3 oder 4.

Steht Y in den Formeln (II) und (III) für den Rest eines Amins, so handelt es sich vorzugsweise um ein Amin der Formel (XV)

$R^{14}$-$NH_2$ (XV)

in der

$R^{14}$ für einen gegebenenfalls maximal 3-fach durch Halogen, wie Chlor und Brom, Nitro, Cyan, Carbamoyl, Trifluormethyl, Phthalimidyl, $C_1$-$C_6$-Alkylcarbonylamino, vorzugsweise Acetylamino, Benzoylamino, das seinerseits durch Chlor, $C_1$-$C_6$-Alkyl, vorzugsweise Methyl oder Nitro weitersubstituiert sein kann, substituierten Phenylrest, α-oder ß-Naphthyl oder einen Rest der Formeln

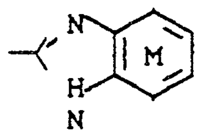 (XVI) 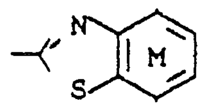 (XVII)

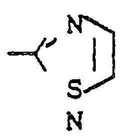 (XVIII) 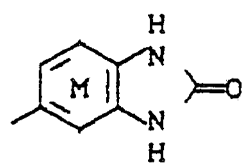 (XIX)

steht, wobei
M die oben angegebene Bedeutung hat.

Geeignete Hydrazinreste Y in den Formeln (II) und (III) leiten sich vorzugsweise von Hydrazinen der Formel (XX)

$R^{14}$-NH-$NH_2$ (XX)

ab, in der
$R^{14}$ die oben angegebene Bedeutung hat.

Y in Formeln (II) und (III) steht weiterhin für ein Hydrazid der Formel (XXI)

$R^{15}$-$CONHNH_2$ (XXI)

in der
$R^{15}$ $C_1$-$C_6$-Alkyl; einen Arylrest, z.B. gegebenenfalls durch Halogen wie Chlor, Brom, Nitro, Cyan, Carbamoyl, $C_1$-$C_6$-Alkylcarbonylamino, vorzugsweise Acetylamino, Benzoylamino, Phthalimidyl substituiertes Phenyl oder einen Hetarylrest z.B. der Formeln (VI) bis (IX) bezeichnet.

Schließlich kann sich Y von einem Hydrazon der Formel (XXII)

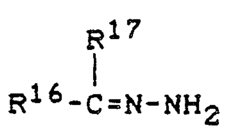 (XXII)

ableiten, in der
$R^{16}$ vorzugsweise für Wasserstoff oder $C_1$-$C_6$-Alkyl und
$R^{17}$ vorzugsweise für gegebenenfalls durch Chlor, Nitro, $C_1$-$C_6$-Alkyl, $C_1$-$C_6$-Alkylcarbonylamino, vorzugsweise Acetylamino, $C_1$-$C_6$-Alkylcarbonyl, vorzugsweise Acetyl, Phthalimidyl, Cyan, Carbamoyl oder Trifluormethyl substituiertes Phenyl oder einen heterocyclischen Rest der Formel (XXIII)

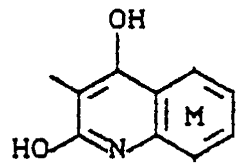

(XXIII)

in der
M die oben angegebene Bedeutung hat, oder einen Rest der Formel (XXIIIa)

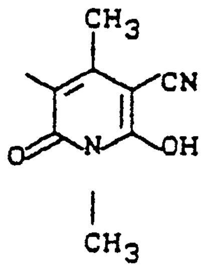

(XXIIIa)

stehen.

Die Herstellung der erfindungsgemäßen Metallkomplexe kann nach mehreren Verfahren erfolgen:

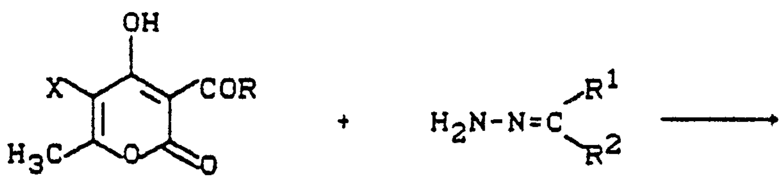

(I)

(XXIV) (XXV)

A. Kondensation von Verbindungen der Formel (XXIV) mit Hydrazonen (XXV) ergibt die Liganden (I), die dann mit Metallen weiter zu Metallkomplexen umgesetzt werden können.

B. Die Liganden der Formel (I) sind ebenso durch Umsetzung der Hydrazone (XVI) mit Verbindungen der Formel (XXVII) zugänglich.

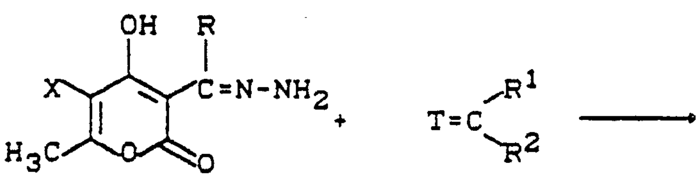

(I)

(XXVI) (XXVII)

In den Formeln (XXIV) bis (XXVII) haben R, $R^1$, $R^2$ und X die oben genannte Bedeutung und T in Formel (XXVII) steht für O oder NZ, wobei Z gegebenenfalls substituiertes Phenyl bezeichnet.

C. Weiterhin können die Liganden (I) aus den Verbindungen (XXIV) und (XXVII) durch Umsetzung mit Hydrazin hergestellt werden, wobei die entstehenden Hydrazone (XXV) und/oder (XXVI) in situ weiterkondensiert werden.

Die Reaktionen werden zweckmäßig in einem organischen Lösungsmittel, gegebenenfalls unter Zusatz einer Säure, bei Temperaturen von 0° bis 150° C, bevorzugt zwischen 20° und 150° C durchgeführt.

Geeignete organische Lösungsmittel sind Alkohole wie Methanol, Ethanol, Amylalkohol oder Glykolmonoalkylether; Aromaten wie Chlorbenzol, Nitrobenzol, Toluol; amidische Lösungsmittel wie Formamid, Dimethylformamid, N-Methylpyrrolidon; oder Säuren wie Ameisensäure oder Essigsäure.

Geeignete Säuren sind anorganische wie Salzsäure, Schwefelsäure oder Phosphorsäure bzw. organische wie Ameisensäure, Essigsäure, Chloressigsäure, Dichloressigsäure, Oxalsäure, Benzolsulfonsäure oder p-Toluolsulfonsäure.

Zur Herstellung der Metallkomplexe aus den Azinen der Formel (I) kann man einerseits den Liganden isolieren und ihn separat mit Metallsalzen komplexieren. Diese Reaktion führt man beispielsweise in einem der oben genannten Lösungsmittel oder in Wasser, gegebenenfalls unter Zusatz der üblichen Dispergiermittel, bei Temperaturen zwischen 50° und 150° C durch.

Als Metallsalze kommen vorzugsweise Acetat, Formiat, Chlorid und Sulfat infrage.

Daneben kann man den Liganden nach seiner Synthese ohne Isolierung unter den oben genannten Bedingungen direkt mit dem Metallsalz zum Komplex umsetzen.

Schließlich besteht die Möglichkeit, während der Ligandensynthese nach den Verfahren A, B oder C bereits in Gegenwart des Metalls zu arbeiten.

Die Metallkomplexe von Azinen der Formel (I) treten zum Teil in mehreren Kristallmodifikationen auf, die durch Tempern bei höheren Temperaturen oder durch Formierungsprozesse erhalten werden können.

Die erfindungsgemäßen Metallkomplexe eignen sich zur Verwendung als organische Pigmente.

So können sie zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischungen mit anderen Stoffen können z.B. solche mit anorganischem Weißpigmenten wie Titandioxid (Rutil) verstanden werden. Zubereitungen sind z.B. Flushpasten mit organischen Flüssigkeiten und gegebenenfalls Konservierungsmitteln. Die Bezeichnung Anstrichmittel steht z.B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für den Papier-, Textil- und Blechdruck zu verstehen. Insbesondere eignen sich die neuen Pigmente zum Pigmentieren von makromolekularen organischen Stoffen.

Die makromolekularen Stoffe können natürlich Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine, z.B. Polyethylen oder Polyamide, Superpolyamide, Polymerisate und Mischpolymerisate aus Acrylestern oder Methacrylestern, Acrylamid, Butadien, Styrol sowie Polyurethane und Polycarbonate. Die mit dem beanspruchten Pigmenten pigmentierten Stoffe können in beliebiger Form vorliegen.

Wegen ihrer hohen Transparenz und Wetterechtheit eignen sich die erfindungsgemäßen Pigmente besonders zum Einsatz in Automobillacken, insbesondere für Metalliclackierungen.

Die erfindungsgemäßen Pigmente sind ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebig, in plastischen Massen gut verarbeitbar und insbesondere ausgezeichnet wetter-, licht- und migrationsecht.

Beispiel 1

a) In 100 ml Dimethylformamid werden 5,2 g 1-Hydrazino-3-(cyano-N-phenylcarbamoylmethylen)-isoindolenin und 4 g 3-Anilinomethylen-4-hydroxy-6-methylpyran-2-on (hergestellt aus 4-Hydroxy-6-methylpyran-2-on mit Orthoameisensäuretrimethylester und Anilin) gelöst und bei 70° C bis zur vollständigen Umsetzung gerührt. Dann setzt man 4,3 g Nickelacetat zu, rührt eine Stunde bei 110° C und saugt heiß ab. Es werden 6 g (71 %) des rotstichig gelben Pigments der Formel

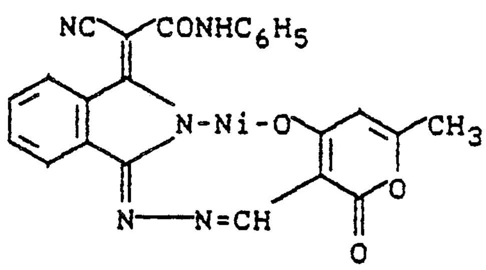

erhalten.

UV in Pyridin ($\lambda_{max}$, $\epsilon$): 482 nm (32 000), 514 nm (24 500).

b) Ein Pigment derselben Struktur in ähnlicher Ausbeute und mit ähnlichen coloristischen Eigenschaften wird erhalten, wenn man in DMF equimolare Mengen 1-Amino-3-(cyano-N-phenyl-carbamoylmethylen)isoindolenin und 4-Hydroxy-6-methyl-pyran-2-on-3-aldehydhydrazon umsetzt und anschließend mit Ni-Acetat komplexiert.

Nach dem in Beispiel 1a) genannten Verfahren werden bei Einsatz der entsprechenden Isoindol-Verbindungen Pigmente der Formel

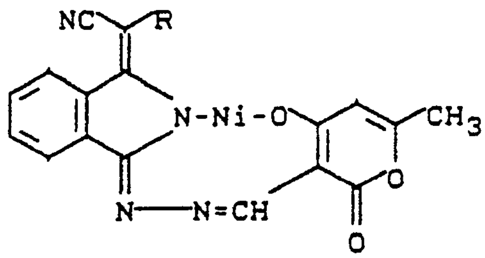

mit den in der Tabelle genannten Bedeutungen für R und den zugehörigen Farbtönen erhalten.

| Beispiel Nr. | R | Farbton |
|---|---|---|
| 2 | $CONHCH_3$ | gelb |
| 3 | $CONHC_2H_5$ | gelb |
| 4 | 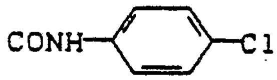 | gelb |
| 5 | 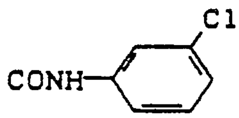 | gelb |
| 6 | 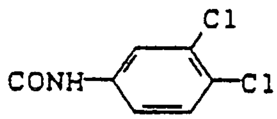 | gelb |
| 7 | 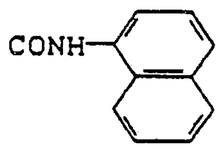 | orange |
| 8 | 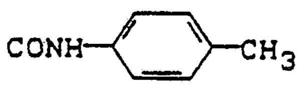 | rotstichig gelb |
| 9 | 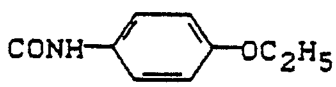 | orange |
| 10 | 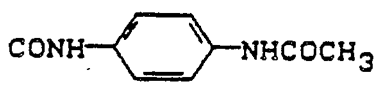 | rotstichig gelb |
| 11 | 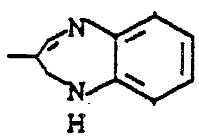 | orange |
| 12 | 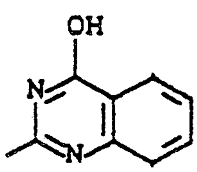 | rotstichig gelb |

Beispiel 13

Ersetzt man in Beispiel 1a) oder 1b) Nickelacetat durch eine entsprechende Menge Kupferacetat, gelangt man zu einem gelbbraunen Pigment der Formel

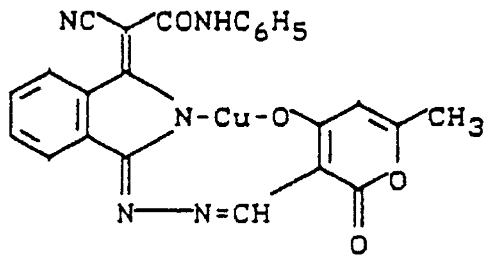

Beispiel 14

Ersetzt man in Beispiel 1a) oder 1b) Nickelacetat durch eine entsprechende Menge Zinkacetat, erhält man ein gelbes Pigment der Formel

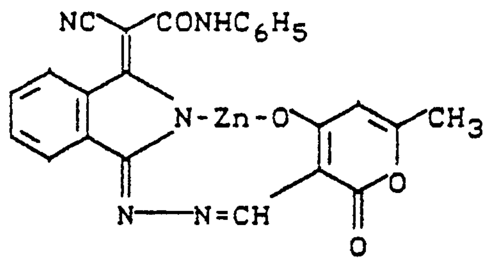

Beispiel 15

Ersetzt man in Beispiel 1a) oder 1b) Nickelacetat durch eine entsprechende Menge Kobalt(II)acetat, gelangt man zu einem braunvioletten Pigment der Formel

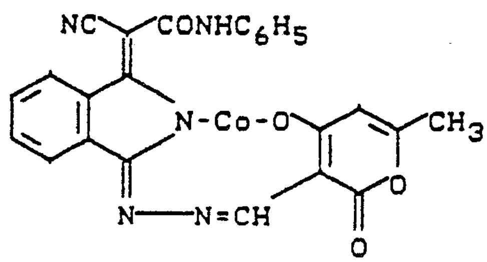

Beispiel 16

a) In 120 ml Dimethylformamid werden 7 g 1-Hydrazino-3-(cyano-N-phenylcarbamoylmethylen)-isoindolenin und 4 g Dehydracetsäure bei 70 °C umgesetzt. Dann setzt man 5,8 g Ni-Acetat zu, rührt 1 Stunde bei 100 °C und erhält nach Absaugen und Trocknen 8,2 g (70 %) des Pigments der Formel

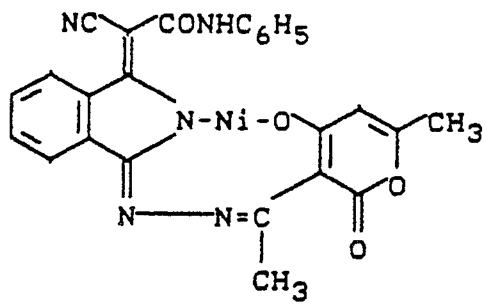

in orangeroten Nadeln.
UV in Pyridin ($\lambda_{max}$, $\epsilon$): 512 nm (25 000), 481 nm (28 300).

b) Ein Pigment derselben Struktur erhält man in ähnlicher Ausbeute und Reinheit, wenn man in DMF 1-Amino-3-(cyano-N-phenylcarbamoylmethylen)-isoindolenin und eine equimolare Menge Dehydracetsäurehydrazon kondensiert und anschließend mit Nickelacetat komplexiert.

c) 6,7 g 1-Amino-3-(cyano-N-phenylcarbamoylmethylen)-isoindolenin und 4 g Dehydracetsäure werden in 120 ml Dimethylformamid bei 0-5° C mit 1,1 ml Hydrazinhydrat versetzt und nach 1 Stunde bei 0° C während 8 Stunden bei 50° C umgesetzt. Dann werden 5,8 g Ni-Acetat zugesetzt und nach 1 Stunde bei 100° C isoliert.
Man erhält das in Beispiel 16a) genannte Pigment in Form orangeroter Nadeln.

d) In 100 ml Dimethylformamid werden 12 g 1-Hydrazino-3-(cyano-N-phenylcarbamoylmethylen)-isoindolenin und 7 g Dehydracetsäure bei 70° C 3 Stunden gerührt. Anschließend wird auf Raumtemperatur abgekühlt und abgesaugt. Man erhält 10 g (56 %) einer Verbindung der Formel

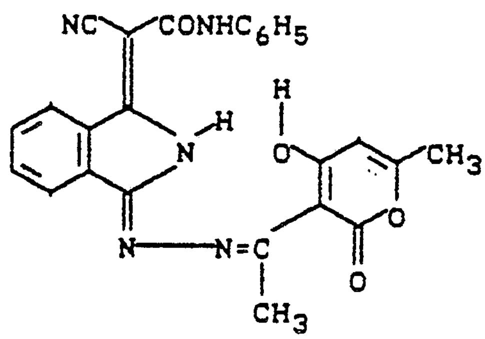

Schmelzpunkt: 251° C

5 g dieser Verbindung werden in 100 ml Dimethylformamid mit 2,8 g Nickelacetat bei 110° C 1 Stunde gerührt. Man saugt bei Raumtemperatur ab, wäscht mit DMF, Methanol und Wasser und erhält nach dem Trocknen 5,1 g (90 %) des Ni-Komplexes.

Mit ähnlichen Ergebnissen läßt sich die Komplexbildung auch in Eisessig, Ethanol, Glykolmonoethylether, Wasser unter Zusatz von 2 % Monopolbrillantöl (Tensid auf Basis von sulfoniertem Ricinusöl), n-Butanol oder N-Methylpyrrolidon anstelle von Dimethylformamid durchführen.

Beispiel 17

Verfährt man gemäß Beispiel 16a) und verwendet 5,9 g 5-Bromdehydracetsäure anstelle von Dehydracetsäure, erhält man entsprechend ein Orangepigment der Formel

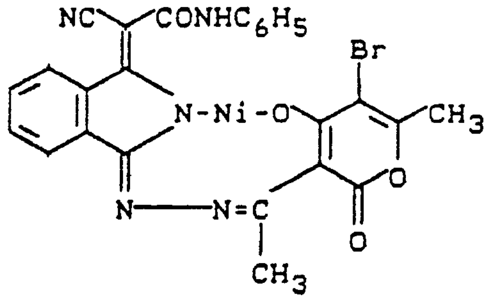

UV in Pyridin ($\lambda_{max}$, $\epsilon$): 483 nm (28 700), 512 nm (25 000)

Verfährt man gemäß Beispiel 16a) und verwendet verschiedene substituierte Isoindole, so erhält man Pigmente der Formel

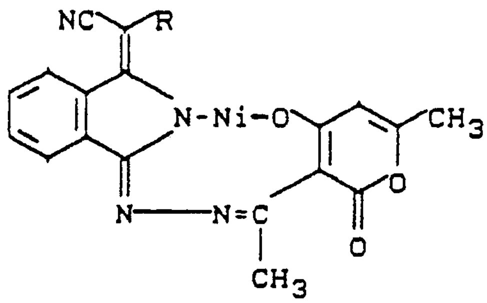

mit den in der folgenden Tabelle angegebenen Bedeutungen für R und den genannten Farbtönen.

| Beispiel Nr. | R | Farbton |
|---|---|---|
| 18 | 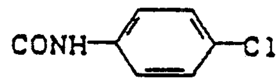 | rotstichig gelb |
| 19 | 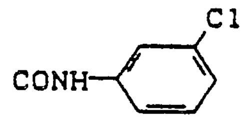 | orange |
| 20 | 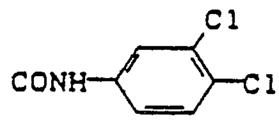 | orange |
| 21 | 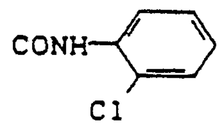 | orange |
| 22 | 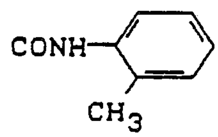 | rotorange |
| 23 | 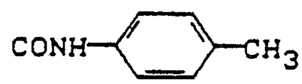 | rot |
| 24 | 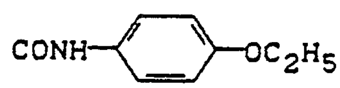 | rot |
| 25 | 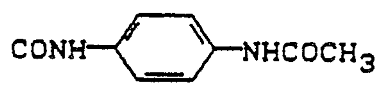 | blaustichig rot |
| 26 | 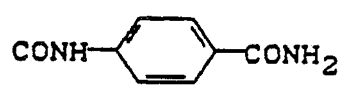 | gelbbraun |
| 27 | 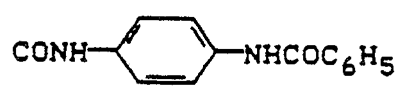 | rot |

| Beispiel Nr. | R | Farbton |
|---|---|---|
| 28 | 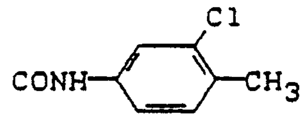 | gelbstichig rot |
| 29 | 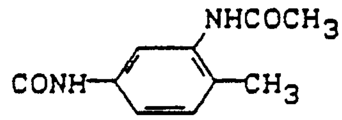 | rot |
| 30 | 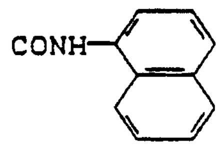 | orange |
| 31 | 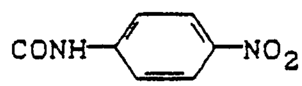 | gelb |
| 32 | 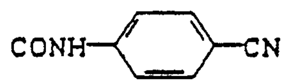 | gelb |
| 33 | 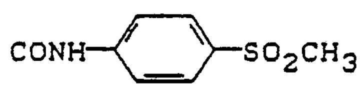 | gelb |
| 34 | 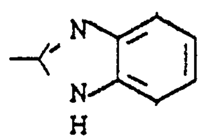 | rot |
| 35 | 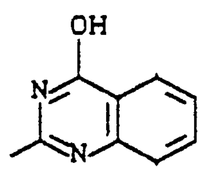 | rot |
| 36 | CN | gelb |
| 37 | $COOCH_3$ | gelb |

Beispiel 38

In 120 ml DMF gibt man 10 g eines Isoindolhydrazons der Formel

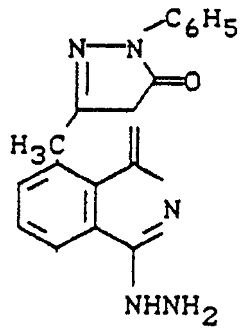

und 5,3 g Dehydracetsäure. Man rührt bei 70 °C bis zur vollständigen Umsetzung, setzt dann 7,8 g Nickelacetat zu und komplexiert bei 110 °C. Nach Absaugen und Trocknen erhält man so ein blaustichig rotes Pigment der Formel

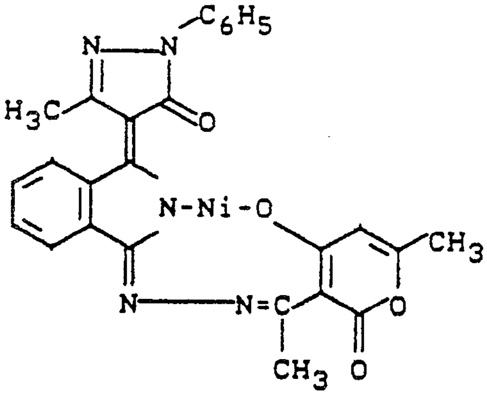

Nach dem in Beispiel 38 genannten Verfahren erhält man bei Einsatz entsprechend substituierter Ausgangsmaterialien Pigmente der Struktur

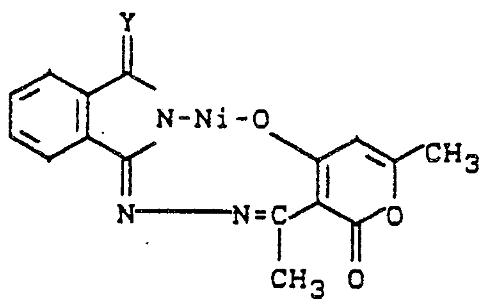

mit den in der folgenden Tabelle genannten Bedeutungen von Y und den genannten Farbtönen.

| Beispiel Nr. | Y | Farbton |
|---|---|---|
| 39 | 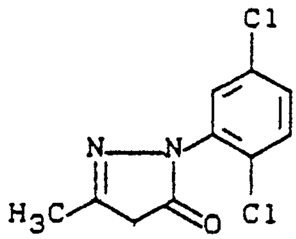 | rot |
| 40 | 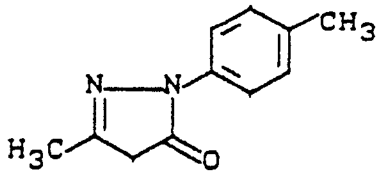 | blaustichig rot |
| 41 | 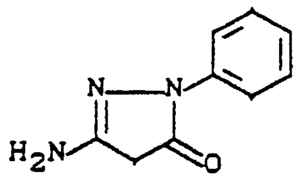 | rot |
| 42 | 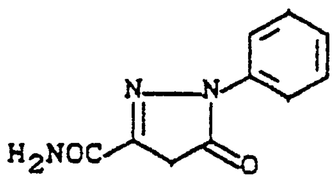 | rot |

| Beispiel Nr. | Y | Farbton |
|---|---|---|
| 43 | 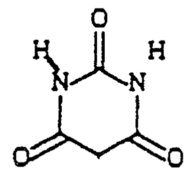 | braungelb |
| 44 | 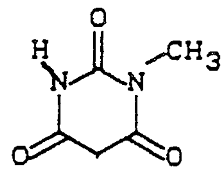 | braungelb |
| 45 | 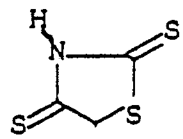 | grauviolett |
| 46 | 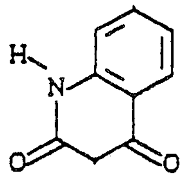 | orange |
| 47 | 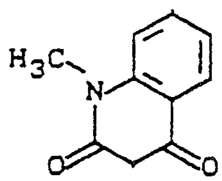 | orange |
| 48 | 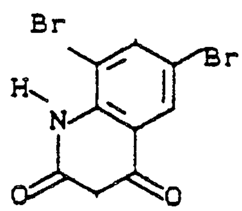 | orange |
| 49 | 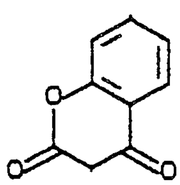 | gelb |

Beispiel 50

In 100 ml DMF werden 6 g Dehydracetsäurehydrazon mit 9,4 g 1-Amino-3-benzimidazolylimino-isoindolenin bei 70° C umgesetzt, mit 8,9 g Nickelacetat versetzt und 1 Stunde bei 120° C gerührt. Nach Absaugen und Trocknen erhält man 6,9 g (43 %) des rotstichig gelben Pigmentes der Formel

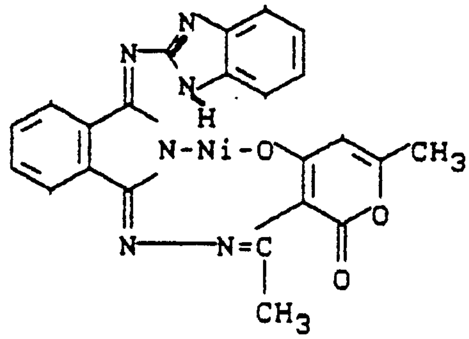

Nickel-Analyse 12,2 % (ber. 12,16 %)
UV in Pyridin ($\lambda_{max}$, $\epsilon$): 341 nm (23 500), 440 nm, (18 500).

Nach dem Verfahren des Beispiels 50 erhält man bei Einsatz entsprechend substituierter Isoindole Pigmente der Struktur

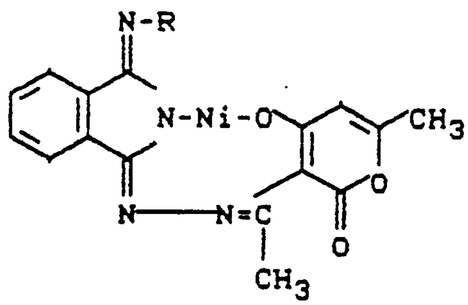

mit den in der folgenden Tabelle angegebenen Bedeutungen für R und den zugehörigen Farbtönen.

| Beispiel Nr. | R | Farbton |
|---|---|---|
| 51 | 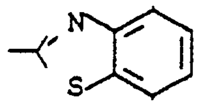 | gelb |
| 52 | 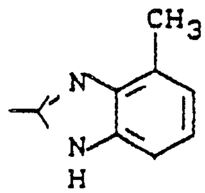 | gelb |
| 53 | 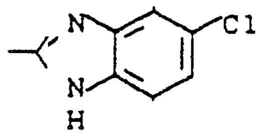 | gelb |
| 54 | 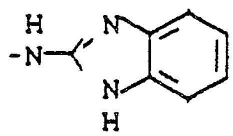 | gelb |
| 55 | 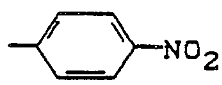 | gelb |
| 56 | $-NHCOC_6H_5$ | gelb |
| 57 | 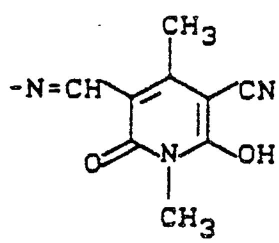 | rot |

Beispiel 58

20 g Naphtholactamhydrazon und 18 g Dehydracetsäure werden in 200 ml Eisessig 90 Minuten gekocht. Nach Absaugen, Waschen mit Ethanol und Trocknen wird eine Verbindung der Struktur

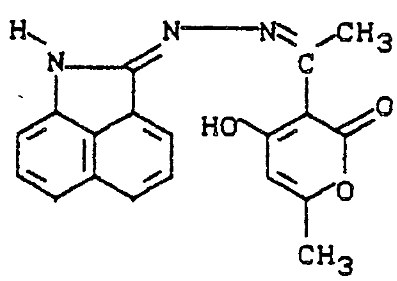

erhalten.

6,6 g dieser Verbindung werden mit 4,0 g Kupferacetat in 100 ml DMF 2 Stunden bei 80 °C, dann 2 Stunden bei 140 °C gerührt. Es wird heiß isoliert und man erhält nach Waschen und Trocknen ein blauviolettes Pigment der Struktur.

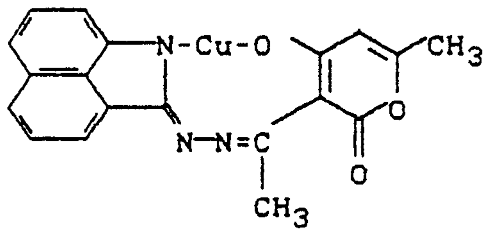

UV in N-Methylpyrrolidon ($\lambda_{max}$): 558 und 613 nm.

Verfährt man nach Beispiel 58 und setzt anstelle von Kupferacetat die Acetate der in der folgenden Tabelle genannten Metalle ein, erhält man entsprechende Pigmente mit den genannten Farbtönen.

| Beispiel-Nr. | Metall | Farbton |
|---|---|---|
| 59 | Zn | rot |
| 60 | Ni | grauviolett |
| 61 | Co (II) | grauviolett |

Beispiel 62

Verfährt man gemäß Beispiel 59 und ersetzt Dehydracetsäure durch eine äquivalente Menge 3-Anilinomethylen-4-hydroxy-6-methylpyran-2-on, kommt man zu einem orange-braunen Nickelkomplex der Formel

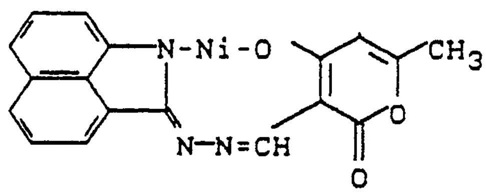

Gemäß Beispiel 62 erhält man bei Ersatz von Nickelacetat durch die Acetate der in der folgenden Tabelle genannten Metalle Pigmente der Struktur

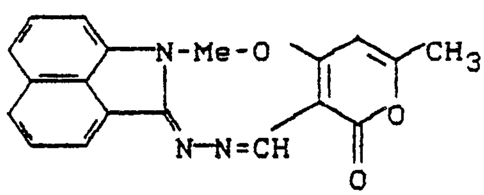

mit den in der Tabelle genannten Farbtönen.

| Beispiel-Nr. | Metall | Farbton |
|---|---|---|
| 63 | Co | blauviolett |
| 64 | Cu | braun |
| 65 | Zn | orangerot |

Beispiel 66

33 g 2-Hydrazinobenzthiazol und 33,6 g Dehydracetsäure werden in 250 ml Eisessig 5 Stunden bei Rückflußtemperatur gerührt. Nach kaltem Absaugen und Waschen mit Ethanol erhält man eine Verbindung der Struktur

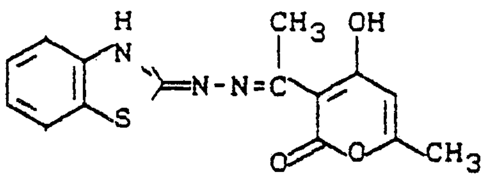

9,5 g dieser Verbindung werden mit 6,0 g Kupferacetat in 100 ml Dimethylformamid 2 Stunden bei 120 °C gerührt. Es wird heiß abgesaugt und mit DMF und Ethanol gewaschen. Man erhält so den Kupferkomplex der oben genannten Verbindung als graubraunes Pulver.

Beispiel 67 (Anwendungsbeispiel)

8 g feingemahlenes Pulver gemäß Beispiel 16a) werden in 92 g eines Einbrennlackes folgender Zusammensetzung dispergiert:

33 % Alkydharz
15 % Melaminharz
5 % Glykolmonomethylether
34 % Xylol
13 % Butanol

Als Alkydharze kommen Produkte auf Basis synthetischer und pflanzlicher Fettsäure wie Kokosöl, Rizinusöl, Rizinenöl, Leinöl u.a. in Frage, Anstelle von Melaminharzen können Harnstoffharze verwendet werden.

Nach erfolgter Dispergierung wird der pigmentierte Lack auf Papier-, Glas-, Kunststoff- oder Metall-Folien aufgetragen und 30 Minuten bei 130 °C eingebrannt. Die Lackierungen besitzen sehr gute Licht- und Wetterbeständigkeit sowie gute Überlackierechtheit.

Beispiel 68 (Anwendungsbeispiel)

0,2 g Pigment nach Beispiel 16a) werden mit 100 g Polyethylen-, Polypropylen- oder Polystyrolgranulat gemischt. Die Mischung kann entweder bei 220 bis 280 °C direkt in einer Spritzgußmaschine verspritzt, oder in einer Strangpresse zu gefärbten Stäben bzw. auf dem Mischwalzwerk zu gefärbten Fellen verarbeitet werden. Die Stäbe bzw. Felle werden gegebenenfalls granuliert und in einer Spritzgußmaschine verspritzt.

Die orangefarbenen Formlinge besitzen sehr gute Licht-und Migrationsechtheit. In ähnlicher Weise können bei 280-300 °C, gegebenenfalls unter Stickstoffatmosphäre, synthetische Polyamide aus Caprolactam oder Adipinsäure und Hexamethylendiamin oder die Kondensate aus Terephthalsäure und Ethylenglykol gefärbt werden.

Beispiel 69 (Anwendungsbeispiel)

Mit einer Druckfarbe, hergestellt durch Anreiben von 35 g Pigment nach Beispiel 16a) und 65 g Leinöl und Zugabe von 1 g Siccativ (Co-Naphthenat, 50 %ig in Testbenzin) werden orangefarbene Offset-Drucke hoher Brillanz und Farbstärke und sehr gute Licht- und Lackierechtheiten erhalten. Verwendung dieser Druckfarbe in Buch-, Licht-, Stein- oder Stahlstichdruck führt zu orangefarbenen Drucken ähnlicher Echtheiten. Verwendet man das Pigment zur Färbung von Blechdruck- oder niedrigviskosen Tiefdruck- oder Drucktinten, erhält man orangefarbene Drucke ähnlicher Echtheiten.

## Ansprüche

1. Metallkomplexe von Azinen der Formel

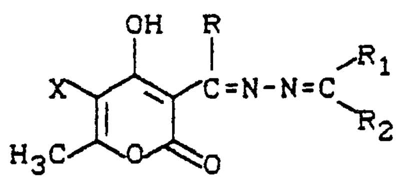

(I)

in der
X Wasserstoff oder Halogen,
R Wasserstoff oder einen organischen Rest,
$R_1$ Wasserstoff oder einen organischen Rest,
$R_2$ einen organischen Rest, wobei $R_1$ und $R_2$ auch zusammen mit dem sie verbindenden C-Atom einen carbo- oder heterocyclischen Ring oder ein carbo-oder heterocyclisches Ringsystem, wobei die genannten Ringe und Ringsysteme substituiert sein können, bilden können, und einer der Reste $R_1$, $R_2$ oder $R_1$, $R_2$ zusammen eine zur Metallsalzbildung befähigte Gruppe enthalten, bedeuten.

2. Zn-, Cd-, Mn-, Co-, Fe-Komplexe gemäß Anspruch 1.

3. Ni- und Cu-Komplexe gemäß Anspruch 1.

4. Metallkomplexe gemäß einem oder mehreren der Ansprüche 1-3, bei denen X in Formel I für H steht.

5. Metallkomplexe gemäß einem oder mehreren der Ansprüche 1-4, bei denen R in Formel I für H oder $CH_3$ steht.

6. Metallkomplexe gemäß einem oder mehreren der Ansprüche 1-5, bei denen

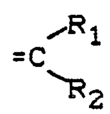

in Formel I für den Rest eines 5- oder 6-gliedrigen Rings, der 1 oder 2 Heteroatome aus der Reihe N, O, S enthält, substituiert sein kann und zur Metallsalzbildung befähigte Gruppe aufweist, und an den ein gegebenenfalls substituierter carbo- oder ein gegebenenfalls substituierter heterocyclischer Ring, z.B. ein Benzo- oder Cyclohexylen-Rest oder der Rest eines 1 oder 2 Heteroatome aus der Reihe N, O, S enthaltenden Ringes ankondensiert sein kann, steht.

7. Metallkomplexe gemäß einem oder mehreren der Ansprüche 1-5, bei denen

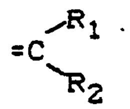

in Formel I für

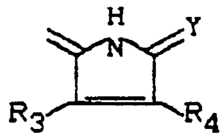

steht, wobei
Y für den zweiwertigen Rest einer Verbindung mit zwei austauschbaren Wasserstoffatomen an einem C- oder N-Atom, insbesondere den zweiwertigen Rest einer methylenaktiven Verbindung, eines Amins, Hydrazins, Hydrazids oder Hydrazons steht und
$R_3$ und $R_4$ H oder organische Reste, bezeichnen, wobei $R_1$ und $R_2$ auch zusammen einen ankondensierten carbo-oder heterocyclischen Ring oder ein carbo- oder heterocyclisches Ringsystem, wobei die genannten Ringe und Ringsysteme substituiert sein können, bilden können.

8. Metallkomplexe gemäß einem oder mehreren der Ansprüche 1-5, bei denen

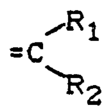 in Formel I für 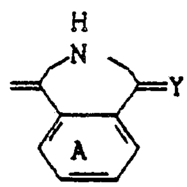

steht, wobei Y für den zweiwertigen Rest einer Verbindung mit zwei austauschbaren Wasserstoffatomen an einem C- oder N-Atom, insbesondere den zweiwertigen Rest einer methylenaktiven Verbindung, eines Amins, Hydrazins, Hydrazids oder Hydrazons, steht und der Ring A 1-4 Substituenten tragen kann.

9. Metallkomplexe gemäß einem oder mehreren der Ansprüche 1-5, bei denen

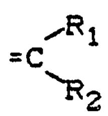 für 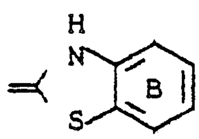 oder

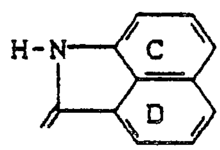

steht, wobei die mit B, C und D bezeichneten Ringe substituiert sein können.

10. Verfahren zum Pigmentieren von hochmolekularem organischen Material, dadurch gekennzeichnet, daß man Metallkomplexe gemäß einem oder mehreren der Ansprüche 1-9 verwendet.